# EUROPÄISCHE PATENTSCHRIFT

(11) **EP 1 478 584 B1**
(45) Veröffentlichungstag und Bekanntmachung des Hinweises auf die Patenterteilung: **03.08.2005**
(21) Anmeldenummer: 03706116.5
(22) Anmeldetag: 18.02.2003
(51) Int. Cl.: B65G 1/04, B66F 9/14

(54) **REGALBEDIENGERÄT MIT EINEM LASTAUFNAHMEMITTEL**
STORAGE RETRIEVAL SYSTEM COMPRISING A LOAD RECEIVING ELEMENT
APPAREIL DE MANUTENTION POUR RAYONNAGE COMPRENANT UN ELEMENT DE RECEPTION DE CHARGE

(30) Priorität: 25.02.2002 AT 12102 U
(43) Veröffentlichungstag der Anmeldung: 24.11.2004
(73) Patentinhaber: TGW Transportgeräte GmbH, 4600 Wels (AT)
(72) Erfinder: HANSL, Rudolf, A-4813 Altmünster (AT)
(74) Vertreter: Secklehner, Günter, Dr.
(86) Internationale Anmeldenummer: PCT/AT2003/000052
(87) Internationale Veröffentlichungsnummer: WO 2003/070607

(56) Entgegenhaltungen:
- EP-A- 0 353 556
- DE-A- 3 431 580
- DE-A- 4 422 240
- DE-A- 19 801 856
- DE-U- 1 966 168
- US-A- 3 941 267

## Beschreibung

Die Erfindung betrifft ein Regalbediengerät, wie im Oberbegriff des Anspruches 1 beschrieben.

Aus dem Dokument US 3,941,267 A ist ein mobiles, schienengebundenes Regalbediengerät mit_einem teleskopierbaren Lastaufnahmemittel zum Ein- und Auslagern von Langgut in bzw. aus einer Regalanlage bekannt. Das Langgut wird dazu auf einem Teleskopauszug des Lasttragmittels abgestützt, welches an seiner Unterseite mit frei drehbar gelagerten Rollen versehen ist deren Drehachsen senkrecht zur Ausfahrrichtung verlaufen. Damit wird der Teleskopauszug im Regalbereich auf in Ausfahrrichtung erstreckenden, parallel zueinander im Regalbereich angeordneten Führungsprofilen abgestützt. Zusätzlich dazu ist der teleskopische Auszug zum Anheben bzw. Absenken des Langguts in der Regalanlage mit Parallelogramm-Hebelanordnungen zwischen Basisträgern und Stützträgern für das Langgut versehen, die über einen Seil- oder Kettentrieb und einem Antriebsmotor betätigbar sind wodurch das Langgut auf die Regalträgern abgelegt bzw. davon abgehoben wird und damit während dieses Ein- bzw. Auslagerungsprozesses die mit den Rollen versehenen Stütztsägern des Teleskopauszuges und damit der Teleskopauszug insgesamt die Abstützfunktion auf den Stützprofilen der Regalanlage erfüllen. Eine derartige Ausbildung erfordert allerdings eine relativ große freie Einfahrhöhe für den Teleskopauszug in die Regalanlage, wodurch das nutzbare Lagervolumen der Regalanlage eingeschränkt wird.

Aus der DE 44 22 240 A1 ist ein Verfahren und eine Einrichtung zur Handhabung von Transportuntersätzen, bestehend aus einer Transfereinrichtung mit einer Hubplattform und mit darauf angeordneten Teleskoparmen, um die Transportuntersätze auf Auflageschienen in ein Regal ein- bzw. auszulagern. Zwischen den Teleskoparmen ist weiters aus der Hubplattform mit den Teleskoparmen verschiebbar ausgebildeter Endlosförderer zur Manipulation der Transportuntersätze angeordnet. Nachteilig bei einer derartigen Anordnung sind die auftretenden hohen Belastungsmomente durch die erforderliche weite Ausladung beim Ein- und Auslagern der Transportuntersätze und des hohen durch die Vorrichtung bedingten Eigengewichtes.

Weiters ist aus der DE 198 01 856 C2 ein Verfahren und eine Vorrichtung zum Beschicken und Entnehmen von Behältern in ein bzw. aus einem Regalfach mit einer Ausfahreinrichtung mit umlaufendem Fördermittel bekannt. Dabei bildet das Fördermittel eine Auflagefläche aus und wird zum Abrollen an der Unterseite des Behälters zur Ausschaltung einer Relativbewegung, entsprechend der Ein- bzw. Ausfahrtrichtung, der Ausfahreinrichtung in jeweils entgegengesetzter Richtung angetrieben. Bei einer derartigen Einrichtung wird ebenfalls ein vom Bediengerät aufzunehmendes hohes Eigengewicht erreicht und mit der Zuladung durch den Behälter entstehen im ausgefahrenen Zustand hohe Momente in der Fördereinrichtung, was eine entsprechende Dimensionierung der gesamten Fördereinrichtung erfordert, wodurch hohe Kosten und ein hoher Energieeinsatz zum Betrieb derartiger Anlagen entstehen.

Gemäß einer weiteren Ausführung, wie aus der DE 34 31 580 A1 bekannt, besteht eine Fördervorrichtung für Güter der verschiedensten Art mit/ohne Paletten aus parallel verlaufenden Lager- und Führungsprofilen, in denen eine Transport- und Verschiebebühne mittels Laufrollen verschiebbar geführt ist. Diese Transport- und Verschiebebühne hat mehrere Trag- und Verschiebemittel, die vorzugsweise durch Rollen gebildet sind und auf denen die Güter bzw. Paletten getragen und zum Aufnehmen und Abgeben verschoben werden. Eine derartige Einrichtung ist grundsätzlich in Regalen selbst installiert, um die Behälter oder Paletten von einem Fördermittel aus in das Regal ein- bzw. aus dem Regal ausschieben zu können.

Aufgabe der Erfindung ist es, ein Regalbediengerät leichter und damit wirtschaftlicher Bauart zu schaffen, mit dem eine hohe Ausladung zur Ein- und Auslagerung üblicher Transporteinheiten in Einfach- bzw. Doppelregalanordnung bei Minimierung des Materialaufwandes für die Vorrichtung erreicht wird.

Diese Aufgabe der Erfindung wird durch die im Kennzeichenteil des Anspruches 1 wiedergegebenen Merkmale erreicht. Der erzielte Vorteil dabei ist, dass durch die zusätzliche Anordnung eines Laststützmittels am Lastaufnahmemittel eine Abstützung der Teleskopanordnung am Regal ohne wesentlicher zusätzlicher Belastung des Regals erreicht wird, wodurch keine Lastmomente von der tragenden Struktur des Regalbediengerätes aufzunehmen sind und damit wesentliche Einsparungen bei der Dimensionierung des Regalbediengerätes, wie auch höhere Standzeiten bei derartigen Vorrichtungen durch die verminderte Belastung erreicht werden.

Möglich ist aber auch eine Ausbildung wie in den Ansprüchen 2 oder 3 beschrieben, weil dadurch eine Anpassung des Lastaufnahmemittels zur Erzielung einer hohen Stabilität, unabhängig von der Ausgestaltung von Paletten, Lagerboxen, etc., erreicht wird.

Von Vorteil ist aber auch eine Ausbildung nach Anspruch 4, wodurch eine geringe Bauhöhe des Lastaufnahmemittels erreicht wird und damit ein hoher Lagernutzen gegeben ist.

Eine weitere vorteilhafte Ausgestaltung beschreibt Anspruch 5, weil dadurch für den jeweiligen Einsatzfall eine optimierte Auslegung des Lasttrag- und/oder Laststützmittels erreicht wird.

Gemäß den vorteilhaften Ausbildungen wie in den Ansprüchen 6 bis 8 beschrieben, ergeben sich auch Einsatzmöglichkeiten um bedarfsweise auch Doppelregale wirtschaftlich zu bedienen.

Bevorzugte Weiterbildungen beschreiben aber auch die Ansprüche 9 und 10, weil dadurch beim Einfahren in das Regal und Aufnehmen von Paletten, Lagerboxen etc. die Antriebsvorrichtung der Teleskopanordnung am Hubschlitten antriebsmäßig unterstützt und entlastet wird und durch Anpassung der Geschwindigkeit, zur Ausschaltung einer Relativgeschwindigkeit, zwischen dem Endteleskopauszug und den Paletten bzw. Lagerboxen vermieden werden.

Von Vorteil ist aber auch eine Ausbildung nach Anspruch 11, weil dadurch im erforderlichen Ausmaß eine Winkelangleichung zur Erzielung der vollen Stützfunktion zwischen Laststützmittel und Regalkonstruktion erreicht wird und Verformungen der Struktur der Vorrichtung vermieden werden.

Gemäß der vorteilhaften Weiterbildung wie im Anspruch 12 beschrieben, kann die Palette bzw. Lagerbox vom Auflager aus dem Regal dadurch gezogen werden, dass der Reibwiderstand am Lasttragmittel größer ist, als der Reibwiderstand gegenüber dem Auflager.

Von Vorteil ist auch eine Ausbildung nach Anspruch 13 wegen der damit erreichbaren Spurgenauigkeit beim Ein- und Auslagerungsvorgang des Ladehilfsmittels.

Durch die Weiterbildung wie im Anspruch 14 beschrieben, wird eine positionsgenau Übernahme von Paletten, Lagerboxen etc. auf das Lasttragmittel erreicht

Es sind aber auch Ausbildungen, wie in den Ansprüchen 15 bis 17 beschrieben, vorteilhaft, wodurch eine Anpassung der Ausführung an die unterschiedlichen Auslegungen von Regallagern und Lagerarten möglich ist.

Vorteilhaft ist weiters eine Ausbildung wie im Anspruch 18 beschrieben, weil dadurch das Einfahren in eine Palette auch bei Auftreten von Positioniertoleranzen gesichert erfolgen kann.

Gemäß den vorteilhaften Weiterbildungen wie in den Ansprüchen 19 bis 24 beschrieben, wird ein erschütterungsfreies Einfahren der Raupenanordnungen in eine Palette ermöglicht und tritt auch keine Kippbewegung durch die Möglichkeit des waagrechten Anhebens der Palette auf, nachdem die Raupenanordnungen zur Gänze in das Regal eingefahren sind. Dadurch wird ein sehr schonender Ein- und Auslagerungsvorgang für empfindliche Güter erreicht

Vorteilhaft ist eine Ausbildung gemäß Anspruch 25, weil dadurch eine gesicherte Aufnahme der Palette erreicht wird.

Schließlich sind aber auch Ausbildungen nach den Ansprüchen 26 und 27 vorteilhaft, weil damit insbesondere den unterschiedlichen Ausbildungen von Warenaufnahmemittel Rechnung getragen werden kann und entsprechend angepasste Lösungen verfügbar sind.

### weiter im Urtext auf Seite 4!

Zum besseren Verständnis der Erfindung wird diese anhand der in den Zeichnungen dargestellten Ausführungsbeispielen näher erläutert.

### Es zeigen:

- Fig. 1: ein Regallager mit einem erfindungsgemäßen Bediengerät in Ansicht;
- Fig. 2: eine schematische Darstellung des Lastaufnahmemittels in Schrägansicht;
- Fig. 3: das Lastaufnahmemittel teilweise in den Regalbereich eingefahren zur Aufnahme einer Palette, teilweise im Schnitt;
- Fig. 4: das Lastaufnahmemittel geschnitten gemäß den Linien IV-IV in Fig. 3;
- Fig. 5: eine andere Ausführung der Auflagerung von Paletten zur Entnahme mit dem Lastaufnahmemittel des erfindungsgemäßen Regalbediengerätes;
- Fig. 6: eine weitere Ausführung des Lastaufnahmemittels in Schrägansicht;
- Fig. 7: eine andere Ausführung mit seitlich versetzten Raupenanordnungen für das Lastaufnahmemittel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

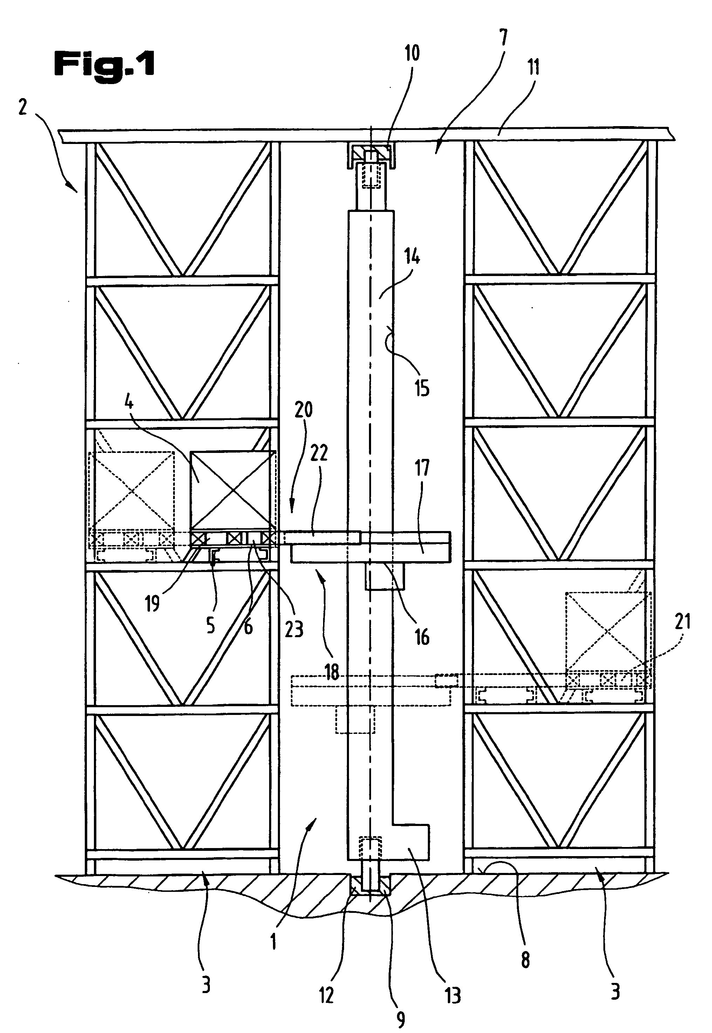

In der Fig. 1 ist ein Regalbediengerät 1 und ein Regallager 2 am Beispiel eines Hochregallagers mit Regalen 3 zur Lagerung von Gütern, Waren 4 auf oder in Warenaufnahmemittel 5, z.B. Paletten 6, gezeigt. Das Regalbediengerät 1 ist hier beispielhaft in einem Regalgang 7 in einer auf einer Aufstandsfläche 8 verlaufenden Schiene 9 und einer Schiene 10 an einer Decke 11 des Regallagers 2 mit Fahrwerken 12 und einer Antriebsanordnung 13 verfahrbarer, senkrecht zur Aufstandsfläche 8 erstreckender, Mast 14, der eine Führungsanordnung 15 für einen zur Aufstandsfläche 8 in senkrechter Richtung verstellbaren, mittels Antrieb 16 verfahrbaren Hubschlitten 17 bildet. Der Hubschlitten 17 ist nach dem bekannten Stand der Technik mit einer in zur Aufstandsfläche 8 parallel verlaufenden Ebene verstellbaren Teleskopanordnung 18, bevorzugt einer zweifach teleskopierbaren Gabelanordnung 19 versehen. Mit dieser sind ausgehend vom Regalgang 7 wahlweise die beidseits des Regalganges 7 angeordneten Regale 3, wie dargestellt Doppelregale, zur Ein- und Auslagerung der Warenaufnahmemittel 5 zu bedienen und zwar unabhängig ob die in vollen Linien gezeigte, dem Regalgang 7 benachbarte Palette 6, oder eine vom Regalgang 7 entfernte - in strichlierten Linien gezeigte Palette 6, oder beide gemeinsam ein- bzw. auszulagern sind. Zu erwähnen ist, dass das Regallager 2 selbstverständlich auch in Form von nicht dargestellten Einzelregalen gebildet sein kann, wobei die wirtschaftlichere Lösung die der Doppelregale, wie im Ausführungsbeispiel gezeigt, darstellt. Das Regal 3 kann sowohl für eine Längs- oder Quereinlagerung der Warenaufnahmemittel 5, z.B. der Paletten 6 wie Euro- Paletten etc. mit einem rechteckigen Grundriss ausgebildet sein. Selbstverständlich sind auch andere Grundrissformen von Warenaufnahmemittel 5 möglich.

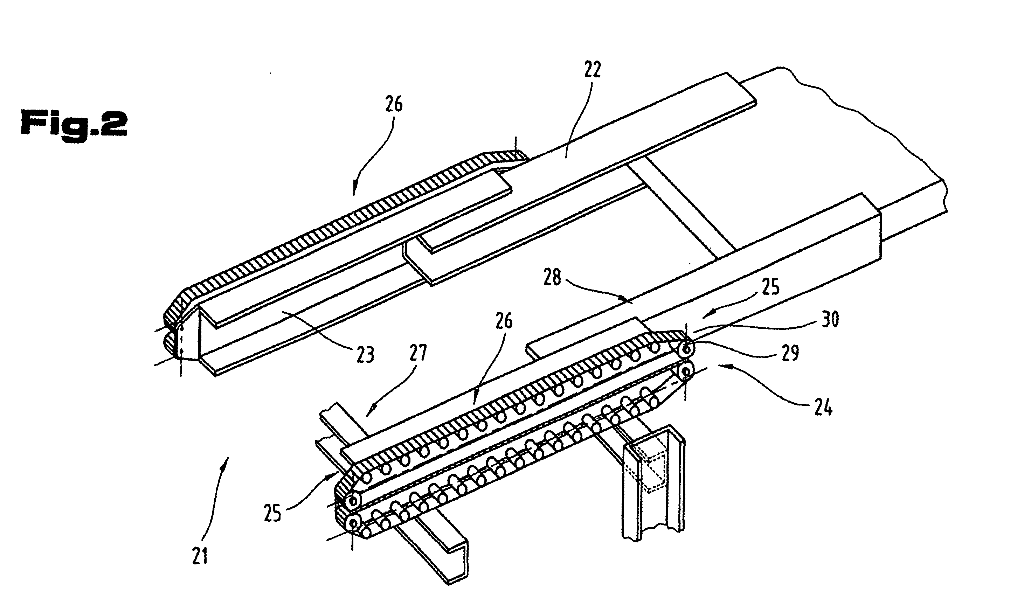

In der Fig. 2 ist nun in schematischer, vereinfachter Darstellung ein durch eine Gabelanordnung 19 der Teleskopanordnung 18 erfindungsgemäß ausgebildetes Lastaufnahmemittel 20 des Regalbediengerätes 1 dargestellt, wobei zur Vereinfachung aus dem Stand der Technik bekannte Antriebsanordnungen für die Teleskopanordnung 18 sowie detaillierte Ausbildungen zu Führungen etc. nicht dargestellt sind und die Teleskopanordnung 18 vereinfacht als über einandergreifende und relativ zueinander in einer Verstellrichtung verstellbare U- Profile gezeigt sind.

Erfindungswesentlich für das Lastaufnahmemittel 20 ist bei einer einfachen oder mehrfachen Teleskopanordnung 18, dass ein die Gabelanordnung 19 bildender Endauszug 21 der Teleskopanordnung 18 bzw. die die Gabeln bildenden Teleskoparme 22, 23 mit einem Laststützmittel 24 und einem Lasttragmittel 25 versehen sind. Diese sind in einer bevorzugten Ausführung als Raupenanordnungen 26 gebildet, die im wesentlichen in entgegengesetzten Endbereichen 27, 28 der Teleskoparme 22, 23 in bezug auf die Aufstandsfläche 8 fluchtend über einander um zur Aufstandsfläche 8 parallelen Achsen 29 drehbar gelagert Umlenkräder 30 mit jeweils unabhängigen, endlos über die Umlenkräder 30 geführten Umlaufmittel 31, z.B. Ketten, Riemen, Seile etc. aufweist.

Nach einer bevorzugten Ausbildung sind die Raupenanordnungen 26 bzw. die Umlaufmittel 31 durch die Anordnung und dem Durchmessers der Umlenkräder 30 und deren Lageabstimmung mit Stützführungen der Umlaufmittel 31 in den Endbereichen mit Ein- und Ausfahrneigungen versehen um ein Einfahren in das Regal und Aufnehmen der Paletten 6 auch bei Maß- und Positionsabweichungen zu erleichtern.

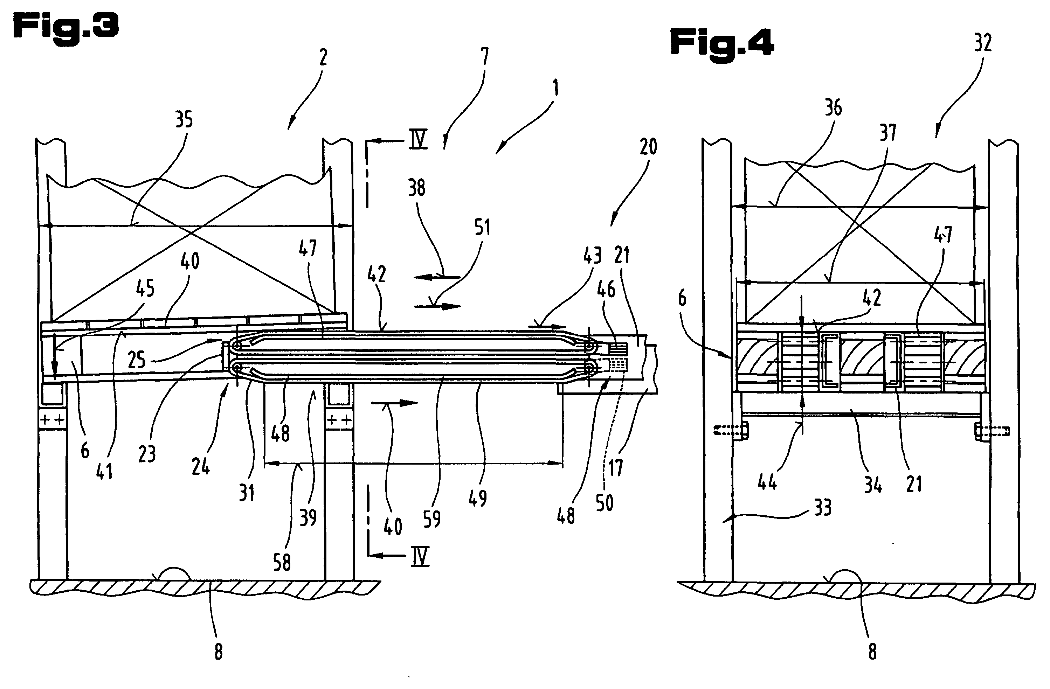

Weiters ist in den Fig. 3 und 4 ein Regalplatz 32 zwischen zwei Regalstehern 33 und den diese verbindenden Auflagerprofilen 34, die eine Stellfläche für das Warenaufnahmemittel 5, insbesondere die Palette 6 in einer zur Aufstandsfläche 8 parallelen Ebene ausbilden, gezeigt. Diese Ausführung ist für die Längseinlagerung der Paletten 6 mit rechteckigem Grundriss vorgesehen, wobei eine Tiefe 35 des Regalplatzes 32 für eine Längseinlagerung ausgelegt ist und eine lichte Weite 36 zwischen den Regalstehern 33 geringfügig größer ist als eine Breite 37 der Palette 6 bzw. des Warenaufnahmemittels 5.

Wie nun insbesondere der Fig. 3 zu entnehmen, ist das Lastaufnahmemittel 20 des Regalbediengerätes 1 in Einfahrrichtung gemäß - Pfeil 38 - zur Entnahme der Palette 6 mit der darauf befindlichen Ware mit seinem in Richtung der Breite 37 voneinander beabstandeten endseitigen Teleskoparmen 23 teilweise in das Regal eingefahren, dargestellt. Die Teleskoparme 23 sind mit den übereinander angeordneten und fluchtend ausgerichteten Raupenanordnungen 26 versehen, wobei eine Raupenanordnung 26 je Teleskoparm 23 mit einer der Aufstandsfläche 8 zugewandten, vom endlosen Umlaufmittel 31 ausgebildeten Oberfläche 39 am Auflagerprofil 34 abrollend gemäß - Pfeil 40 - aufliegt und damit das Eigengewicht wie auch das Gewicht der Zuladung von der Regalstruktur getragen wird. Sobald also die Raupenanordnung 26 des Laststützmittels 24 beim Einfahren in den Regalplatz 32 am Auflagerprofil 34 aufliegt wirken keine Lastmomente auf das Regalbediengerät 1 bzw. dem Mast 14, Fahrwerke 12 etc. ein.

Zur Aufnahme der Palette 6 sind einem Palettenboden 40 je Teleskoparm 22 die durch die weitere Raupenanordnung 26 gebildeten Lasttragmittel 25 zugeordnet, wobei während des Einfahrens gemäß - Pfeil 38 - das endlose Umlaufmittel 31 des Lasttragmittels 25 durch abwälzen an einer Unterseite 41 des Palettenbodens 40 unter die Palette 6 mit einer von der Aufstandsfläche 8 abgewandten Oberfläche 42 bewegt. Ein in zur Aufstandsfläche 8 senkrechter Richtung gemessener Abstand 44 zwischen den Oberflächen 39, 42, der endlosen Umlaufmittel 31 ist so bemessen, dass eine Auflagerkraft - gemäß Pfeil 45 - der Palette 6 auf den Auflagerprofilen 34 vermindert wird bzw. ist vorgesehen den Abstand 44 größer auszubilden als eine lichte Palettenhöhe, wodurch - wie der Fig. 3 zu entnehmen - während des Einfahrens eine Schrägstellung der Palette 6 eintritt. Je nach Schwerpunktlage der Palette 6 wird beim weiteren Einfahren die Palette 6 nach einer Kippbewegung waagrecht auf dem Lasttragmittel 25 zur Auflage kommen und ist dann zur Gänze vom Auflagerprofil 34 abgehoben.

Um beim Einfahren des Lasttragmittels 25 gemäß - Pfeil 38 - die Palette 6 bei Verringerung der Auflagerkraft gemäß - Pfeil 45 - und beim Abheben vom Auflagerprofil 34 verlässlich auf das Lasttragmittel 25 zu übernehmen, ist die diese ausbildende Raupenanordnung 26 mit einem Antrieb 46 ausgestattet, mit dem das endlose Umlaufmittel 31 entsprechend der Einfahrgeschwindigkeit des Endauszuges 21 mit dem am Palettenboden 40 abwälzenden Obertrum 47 in zur Einfahrtrichtung gemäß - Pfeil 38 - entgegengesetzter Richtung angetrieben womit keine Relativbewegung zwischen dem Lasttragmittel 25 und der Palette 6 entsteht.

Nach einer bevorzugten Ausführung ist auch ein Antrieb bzw. eine Antriebsverbindung 48, wie in strichlierten Linien gezeigt, für die Raupenanordnung 26 des Laststützmittels 24 vorgesehen um die Abwälzbewegung gemäß - Pfeil 40 - eines Untertrums 49 am Auflagerprofil 34 zu unterstützen.

Es sei weiters darauf hingewiesen, dass anstelle getrennter Antriebe 46 die Antriebsverbindung 48 zwischen den Raupenanordnungen 26, z.B. mittels eine Getriebes 50 erfolgen kann, wobei es, wie noch weiters ausgeführt, erforderlich ist, die Antriebsverbindung 48 bzw. das Getriebe 50 mit einer Freischaltvorrichtung auszubilden, um die Antriebsverbindung 48 zwischen dem Laststützmittel 24 und dem Lasttragmittel 25 lösen zu können. Dies ist für die Ausfahrbewegung gemäß - Pfeil 51 - erforderlich, nachdem der Endauszug 21 zur Gänze in den Regalplatz 32 und damit in die Palette 6 eingefahren ist und um die Palette 6 nach Auflagerung auf der Raupenanordnung 26 des Lasttragmittels 25 aus dem Regal 3 zu entnehmen. Bei diesem Bewegungsablauf zur Entnahme und des Ausfahrens gemäß - Pfeil 5.1 - wird die Raupenanordnung 26 des Lasttragmittels 25 mittels einer Blockiervorrichtung 51 bzw. mittels des Antriebes 26 an einer Abwälzbewegung gehindert und so die Palette 6 von den Auflagerprofilen 34 durch den zwischen dem Obertrum 47 und dem Palettenbodens 40 wirkenden Reibwiderstand gezogen und durch Einfahren der Teleskopanordnung 18 in Nullstellung gegenüber dem Hubschlitten 17 in den Regalgang 7 verbracht und anschließend durch Verfahren des Regalbediengerätes 1 aus dem Regallager 2 befördert.

Während der Ausfahrbewegung gemäß - Pfeil 51 - des Endauszuges 21 aus dem Regal 3 wird nach einer bevorzugten Ausbildung die Raupenanordnung 26 des Laststützmittels 24, welches auf zumindest einem der Auflagerprofile 34 mit dem Untertrum 49 aufliegt und damit die Teleskopanordnung 18 abstützt, in gegenüber der Einfahrbewegung entgegengesetzter Richtung vom Antrieb 46 betrieben um die Ausfahrbewegung zu unterstützen und eine Relativbewegung zwischen dem Untertrum 49 und dem Auflagerprofil zu vermeiden.

In einer vereinfachten Ausführung, insbesondere bei geringeren Lagerlasten, kann auf den Antrieb 46 für die Raupenanordnung 26 des Laststützmittels 24 bzw. auf die Anordnung der Antriebsverbindung 48 gegebenenfalls verzichtet werden, während der Antrieb 46 für die Raupenanordnung 26 des Lasttragmittels 25 jedenfalls zweckmäßig bzw. unabdingbar ist.

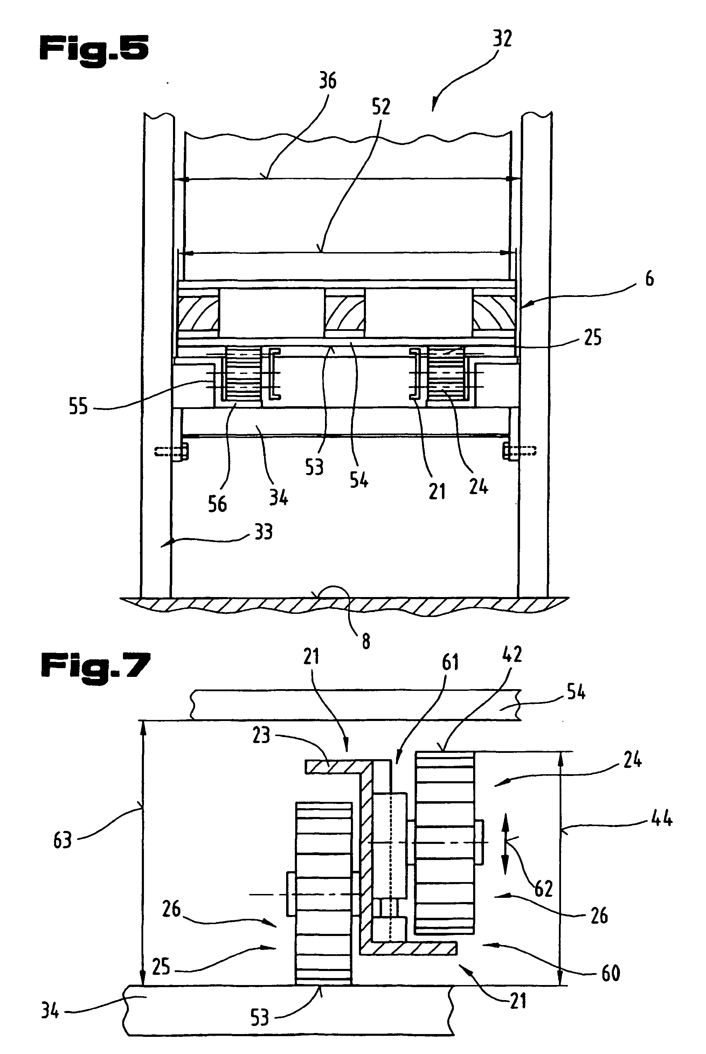

In der Fig. 5 ist nun eine weitere Ausführung für eine sogenannte Quereinlagerung der Palette 6, bei der die Weite 36 zwischen den Regalstehern 33 geringfügig größer einer Länge 52 der Palette 6 ist, gezeigt. Dabei besteht insbesondere bei Normpaletten zum Einfahren des Lasttragmittels 25 bzw. des Endauszuges 21, zwischen dem Auflagerprofil 34 und der Palette 6 durch die konstruktive Beschaffenheit dieser Paletten 5 die Notwendigkeit diese gegenüber dem Auflagerprofil 34 erhöht aufzulagern, da bei dieser Art der Lagerung die Palette 6 in Richtung der Länge 52 verlaufende, eine Unterseite 53 ausbildende Versteifungsprofile 54 angeordnet sind. Nach einer bevorzugten Ausführung ist dabei die Palette 6 in dem Regalplatz 52 auf in Richtung der Tiefe 35 verlaufenden, insbesondere Z-Profilen 55 aufgelagert, wobei auf dem Auflagerprofilen 34 des Regales 3 aufliegende Schenkel 56 der Z-Profile 55 zueinander weisen. Bei dieser bevorzugten Ausführung wird eine durchgehende Stützauflage durch den Schenkel 56 für die Raupenanordnung 26 des Laststützmittels 24 ausgebildet und dient somit der Abstützung des Endauszuges 21 des Lasttragmittels 25. Selbstverständlich sind aber auch andere Profile bzw. nur im Bereich der Auflagerprofile 34 die erforderliche Erhöhung gewährleistende Stützelemente möglich, da, wie bereits in den vorhergehenden Beispielen beschrieben, die Raupenanordnung 26 des Laststützmittels 24 auch am Auflagerprofil 34 abgestützt werden kann.

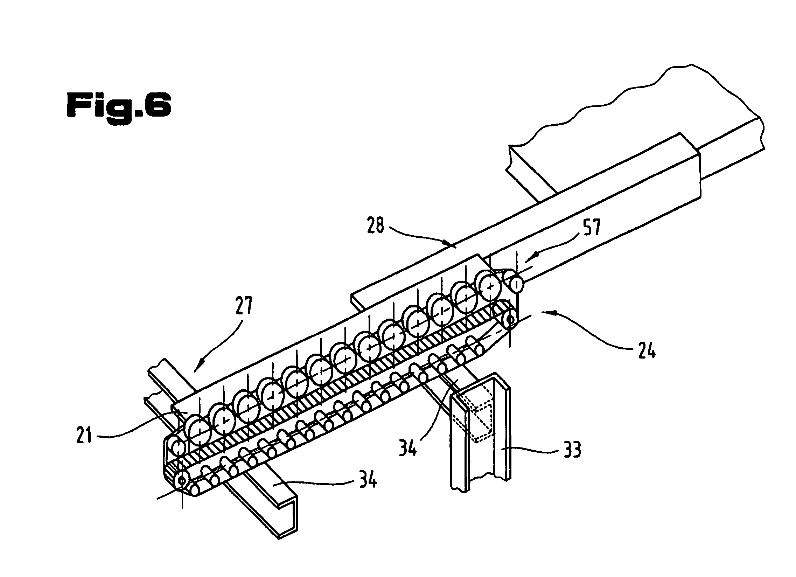

Zu erwähnen ist noch, dass es bei einer weiteren Ausführungsvariante auch möglich ist, anstelle der Raupenanordnung 26 des Lasttragmittels 25, speziell bei Verwendung von Warenaufnahmemittel 5 mit einem durchgehenden Bodenbelag - wie in einer Prinzipdarstellung in Fig. 6 gezeigt -, eine Rollenanordnung 57 vorzusehen, wobei es hier ebenfalls möglich ist, die Rollenanordnung 57 mit dem Antrieb 46 und der Blockiervorrichtung 51 auszustatten und die Rollenanordnung so zu gestalten, dass ebenfalls die bereits in den vorhergehenden Figuren beschriebenen Ein- und Ausfahrneigungen in den Endbereichen des Lasttragmittels 25 und des Laststützmittels 24 bestehen.

Zurückkommend auf Fig. 3 sei noch erwähnt, dass es unterschiedliche Möglichkeiten gibt, die erforderliche Abstützung des Obertrums 47 und des Untertrums 48 der Raupenanordnungen 26 zur Erzielung einer, über eine parallel verlaufende Länge 58 wirkenden Abstützung für das Umlaufmittel 31 vorzusehen. Derartige Einrichtungen sind z.B. starr angeordnete Führungsanordnungen 59, die mit einem reibarmen Belag z.B. Teflon-, Aramidbelag etc. versehen sind, wie natürlich auch Stützrollen möglich sind.

In der Fig. 7 ist eine weitere Ausbildung gezeigt, nach der vorgesehen ist die Raupenanordnungen 26 für das Lasttragmittel 25 und das Laststützmittel 24 nicht fluchtend sondern in seitlich versetzten Ebenen am Teleskoparm 23 anzuordnen wodurch eine Überlappung der Raupenanordnungen 26 möglich ist und der Endauszug 21 damit eine geringe Bauhöhe aufweisen kann. Weiters ist bei dieser Ausbildung für zumindest eine der Raupenanordnungen 26 eine Verstellvorrichtung 60 vorgesehen mit der der Abstand 44 zwischen der Oberfläche 39 und der Oberfläche 42 von Obertrum 47 und Untertrum 49 durch Verstellung in einer Führungsanordnung 61 gemäß einem Doppelpfeil 62 variierbar ist. Damit kann beim Einfahren in das Regal 3 ein Abstand 44 eingestellt sein der kleiner ist als eine lichte Höhe 63 des Palettenunterbaues, d.h. es wird eingefahren ohne die Palette 6 in eine Schräglage zu versetzen. Nach dem vollständigen Einfahren des Lasttragmittels 25 wird der Abstand 44 durch Betätigung der Verstellvorrichtung 60 auf ein Maß größer als die lichte Höhe 61 vergrößert wobei das Laststützmittel 24 am Auflageprofil 34 zur Auflage kommt und die Palette 6 mit der Ware 4 vom Auflageprofil 34, in seiner waagrechten Lage abgehoben wird. Selbstverständlich ist die Verstellvorrichtung 60 mit einer Hubkraft die der max. zu erwartenden Last entspricht ausgelegt. Für eine derartige Verstellvorrichtung 60 bestehen verschiedene technische Lösungen wie Exzentertriebe, Spindeltriebe, Druckzylinder etc. auf die nicht weiters eingegangen werden muss. Eine derartige Ausbildung bietet insbesondere für stoßempfindliche Lagerwaren den Vorteil dass keine Erschütterung der Ware durch eine Kippbewegung entsteht. Es wird noch darauf hingewiesen dass eine derartige Verstellvorrichtung 60 nicht auf das in Fig. 7 gezeigte Ausführungsbeispiel beschränkt ist sondern auch bei den vorhergehend beschriebenen Ausführungen anwendbar ist.

Zu erwähnen sind selbstverständlich noch die vorgesehenen jedoch nicht im Detail erwähnten Steuer- und Überwachungseinrichtungen und Elemente insbesondere für die Antriebe 46, wie Geschwindigkeitsregelung, Drehzahlregelung, Drehzahlumkehrregelung, Synchronisiereinrichtung , Näherungssensoren, Überlastschutzeinrichtungen etc. die im einzelnen dem Stand der Technik entsprechen und aus betriebs- und sicherheitstechnischen Erfordernissen vorgesehen sind.

Der Ordnung halber sei abschließend darauf hingewiesen, dass zum besseren Verständnis des Aufbaus des Regalbediengerätes 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3, 4; 5, 6; 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Regalbediengerät
- 2: Regallager
- 3: Regal
- 4: Ware
- 5: Warenaufnahmemittel

- 6: Palette
- 7: Regalgang
- 8: Aufstandsfläche
- 9: Schiene
- 10: Schiene

- 11: Decke
- 12: Fahrwerk
- 13: Antriebsanordnung
- 14: Mast
- 15: Führungsanordnung

- 16: Antrieb
- 17: Hubschlitten
- 18: Teleskopanordnung
- 19: Gabelanordnung
- 20: Lastaufnahmemittel

- 21: Endauszug
- 22: Teleskoparm
- 23: Teleskoparm
- 24: Laststützmittel
- 25: Lasttragmittel

- 26: Raupenanordnung
- 27: Endbereich
- 28: Endbereich
- 29: Achse
- 30: Umlenkrad

- 31: Umlaufmittel
- 32: Regalplatz
- 33: Regalsteher
- 34: Auflagerprofil
- 35: Tiefe

- 36: Weite
- 37: Breite
- 38: Pfeil
- 39: Oberfläche
- 40: Palettenboden

- 41: Unterseite
- 42: Oberfläche
- 43: Pfeil
- 44: Abstand
- 45: Pfeil

- 46: Antrieb
- 47: Obertrum
- 48: Antriebsverbindung
- 49: Untertrum
- 50: Getriebe

- 51: Pfeil
- 52: Länge
- 53: Unterseite
- 54: Versteifungsprofil
- 55: Z-Profil

- 56: Schenkel
- 57: Rollenanordnung
- 58: Länge
- 59: Führungsanordnung
- 60: Verstellvorrichtung

- 61: Führungsanordnung
- 62: Doppelpfeil
- 63: Höhe

## Patentansprüche

1. Regalbediengerät für das Ein- und Auslagern von Paletten, Lagerboxen etc. in ein bzw. aus einem Regallager mit einem in einem Regalgang in Längs- und Hochrichtung verfahrbaren Hubschlitten mit einem in Regale (3) des Regallagers einfahrbaren, teleskopierbaren Lastaufnahmemittel, mit einem zwischen einer Stellung am Hubschlitten (17) und einer Stellung im Regal (3) verstellbaren Endauszug (21) mit zumindest einem Lasttragmittel (25) und ein den Endauszug (21) während des Ein- und Ausfahrens in und aus dem Regal (3) auf diesem abstützenden Laststützmittel (24), **dadurch gekennzeichnet, dass** das Laststützmittel (24) durch zumindest eine Raupenanordnung (26) mit einem endlosen Umlaufmittel (31) gebildet ist und auf dem Teleskoparm (24) als Lasttragmittel (25) eine weitere Raupenanordnung (26) oder eine Rollenanordnung (57) angeordnet ist.

2. Regalbediengerät nach Anspruch 1, **dadurch gekennzeichnet, dass** das Lastaufnahmemittel (20), bevorzugt durch zwei von einander beabstandeter Teleskoparme (23) mit je einem Lasttragmittel (25) und einem Laststützmittel (24) gebildet ist.

3. Regalbediengerät nach Anspruch 1 oder 2, **dadurch gekennzeichnet, dass** die Raupenanordnungen (26) des Laststützmittels (24) und des Lasttragmittels (25) in einer zu einer Aufstandsfläche (8) des Regalbediengerätes (1) senkrecht verlaufenden Ebene fluchtend zueinander angeordnet sind und die Lastsiützmittel (24) der Aufstandsfläche (8) zugewandt am Teleskoparm (23) angeordnet sind.

4. Regalbediengerät nach einem der vorhergehenden Ansprüche, **dadurch gekennzeichnet, dass** die Raupenanordnungen (26) des Laststützmittels (24) und des Lasttragmittels (25) in zueinander parallel versetzten, senkrecht zur Aufstandsfläche (8) verlaufenden Ebenen angeordnet sind.

5. Regalbediengerät nach einem der vorhergehenden Ansprüche, **dadurch gekennzeichnet, dass** die Raupenanordnung (26) durch einen über in Endbereichen (27, 28) des Teleskoparms (23) angeordneten Umlenkrädern (30) endlos ausgebildeten Ketten-, Riemen-, oder Seilstrang gebildet ist.

6. Regalbediengerät nach einem der vorhergehenden Ansprüche, **dadurch gekenn** **zeichnet, dass** eine Länge (58) der Raupenanordnung (26) etwa einer einfachen Regaltiefe (35) entspricht.

7. Regalbediengerät nach einem der vorhergehenden Ansprüche, **dadurch gekennzeichnet, dass** die Teleskopanordnung (18) durch eine zweiarmige Teleskopausbildung gebildet ist.

8. Regalbediengerät nach einem der vorhergehenden Ansprüche, **dadurch gekennzeichnet, dass** die Raupenanordnung (26) des Lasttragmittels (25) in dessen Länge (58) zweiteilig ausgebildet ist.

9. Regalbediengerät nach einem der vorhergehenden Ansprüche, **dadurch gekennzeichnet, dass** die Raupenanordnung (26), insbesondere des Lasttragmittels (25), mit einem Antrieb (46) antriebsverbunden ist.

10. Regalbediengerät nach einem der vorhergehenden Ansprüche, **dadurch gekennzeichnet, dass** ein Antriebsmotor der Raupenanordnung (26) des Lasttragmittels (25) durch einen Elektro-, Fluid- oder Hydromotor gebildet ist.

11. Regalbediengerät nach einem der vorhergehenden Ansprüche, **dadurch gekennzeichnet, dass** die Teleskopanordnung (18) am Hubschlitten (17) um eine zur Aufstandsfläche (8) parallel und zur Ausfahrrichtung der Teleskopanordnung (26) etwa senkrecht verlaufende Achsausbildung halbstarr gelagert ist.

12. Regalbediengerät nach einem der vorhergehenden Ansprüche, **dadurch gekennzeichnet, dass** die Raupenanordnung (26) des Lastftagmittels (25) mit einer Blockiervorrichtung (51) versehen ist.

13. Regalbediengerät nach einem der vorhergehenden Ansprüche, **dadurch gekennzeichnet, dass** Rollenachsen der Rollenanordnung (57) des Lasttragmittels (25) zur Ausfahrrichtung der Teleskopanordnung (18) senkrecht und zur Aufstandsfläche (8) parallel verlaufen.

14. Regalbediengerät nach einem der vorhergehenden Ansprüche, **dadurch gekennzeichnet, dass** am Teleskoparm (23) eine kuppelbare Rückhaltevorrichtung für die Paletten etc. angeordnet ist.

15. Regalbediengerät nach einem der vorhergehenden Ansprüche, **dadurch gekennzeichnet, dass** zwischen der Raupenanordnung (26) des Laststützmittels (24) und der Raupenanordnung (26) des Lasttragmittels (25) ein durch ein Getriebe (50) gebildete Antriebsverbindung (48) besteht.

16. Regalbediengerät nach einem der vorhergehenden Ansprüche, **dadurch gekennzeichnet, dass** die Antriebsverbindung (48) entkuppelbar ausgebildet ist.

17. Regalbediengerät nach einem der vorhergehenden Ansprüche, **dadurch gekennzeichnet, dass** die Antriebe (46) durch der jeweiligen Raupenanordnung (26) direkt zugeordnete, über eine Synchronisiereinrichtung geschwindigkeitsgeregelter insbesondere drehzahlgeregelter Antriebe (46) gebildet ist.

18. Regalbediengerät nach einem der vorhergehenden Ansprüche, **dadurch gekennzeichnet, dass** die Raupenanordnungen (26) des Lasttragmittels (25) und des Laststützmittels (24) in Endbereichen dem Palettenboden (40) und dem Auflageprofil (34) zugewandt mit Ein- und Auslaufneigungen versehen sind.

19. Regalbediengerät nach einem der vorhergehenden Ansprüche, **dadurch gekennzeichnet, dass** ein Abstand (44) zwischen Oberflächen (39, 43) der Umlaufmittel (31) verstellbar ausgebildet ist.

20. Regalbediengerät nach einem der vorhergehenden Ansprüche, **dadurch gekennzeichnet, dass** zumindest eine der Raupenanordnungen (26) insbesondere dem Lasttragmittel (25) eine Verstellvorrichtung (60) für eine relative Verstellung in Richtung einer Gesamthöhe (59) des Lastaufnahmemittels (20) zugeordnet ist.

21. Regalbediengerät nach einem der vorhergehenden Ansprüche, **dadurch gekennzeichnet, dass** zumindest eine der Raupenanordnungen (26) insbesondere das Lasttragmittel (25) in einer Führungsanordnung (61) am Teleskoparm (23) verstellbar gelagert ist.

22. Regalbediengerät nach einem der vorhergehenden Ansprüche, **dadurch gekennzeichnet, dass** die Verstellvorrichtung (60) durch einen Exzentertrieb, Spindeltrieb, Hydro trieb etc. gebildet ist.

23. Regalbediengerät nach einem der vorhergehenden Ansprüche, **dadurch gekennzeichnet, dass** ein Verstellweg der Verstellvorrichtung (60) zwischen 10 mm und 50 mm, insbesondere 30 mm beträgt.

24. Regalbediengerät nach einem der vorhergehenden Ansprüche, **dadurch gekennzeichnet, dass** eine Verstellkraft der Verstellvorrichtung (60) zumindest einer Bruttolast der Palette (6) entspricht.

25. Regalbediengerät nach einem der vorhergehenden Ansprüche, **dadurch gekennzeichnet, dass** eine Länge (58) der Raupenanordnungen (26) etwa einer Tiefe (35) des Regals (3) entspricht.

26. Regalbediengerät nach einem der vorhergehenden Ansprüche, **dadurch gekennzeichnet, dass** ein Umlaufmittel (31) der Raupenanordnungen (26) aus Ketten, Riemen, Bänder etc. gebildet ist.

27. Regalbediengerät nach Anspruch 26, **dadurch gekennzeichnet, dass** dem Umlaufmittel (31) zwischen Umlenkrädern (30) eine Führungsanordnung (59) zugeordnet ist.

## Claims

1. Shelf-servicing device for storing and retrieving pallets, storage boxes, etc., in and from a shelved store room with a lifting carriage displaceable in a shelf aisle in a lengthways and a height direction, having a telescopic load-carrying means which can be inserted in shelves (3) of the shelved store room, an end extension (21) with at least one load-bearing means (25) which can be displaced between a position on the lifting carriage (17) and a position in the shelf (3), and a load-supporting means (24) to support the end extension (21) as it is being moved in and out of the shelf (3), **characterised in that** the load-supporting means (24) is provided in the form of at least one caterpillar track system (26) with an endless circulating means (31) and another caterpillar track system (26) or a roller system (57) is disposed on the telescopic arm (24) as a load bearing means (25).

2. Shelf-servicing device as claimed in claim 1, **characterised in that** the load-carrying means (20) is preferably provided in the form of two telescopic arms (23) disposed at a distance apart from one another, each having a loading bearing means (25) and a load-supporting means (24).

3. Shelf-servicing device as claimed in claim 1 or 2, **characterised in that** the caterpillar track systems (26) of the load-supporting means (24) and the load bearing means (25) are disposed flush with one another in a plane extending perpendicular to a support surface (8) of the shelf-servicing device (1) and the load supporting means (24) are disposed on the telescopic arm (23) facing the support surface (8).

4. Shelf-servicing device as claimed in one of the preceding claims, **characterised in that** the caterpillar track systems (26) of the load-supporting means (24) and the load-bearing means (25) are disposed in parallel planes offset from one another extending perpendicular to the support surface (8).

5. Shelf-servicing device as claimed in one of the preceding claims, **characterised in that** the caterpillar track system (26) is provided in the form of an endless chain, belt or cable strand on pulley wheels (30) disposed in end regions (27, 28) of the telescopic arm (23).

6. Shelf-servicing device as claimed in one of the preceding claims, **characterised in that** a length (58) of the caterpillar track system (26) approximately corresponds to a single shelf depth (35).

7. Shelf-servicing device as claimed in one of the preceding claims, **characterised in that** the telescopic system (18) is provided in the form of a two-armed telescopic arrangement.

8. Shelf-servicing device as claimed in one of the preceding claims, **characterised in that** the caterpillar track system (26) of the load-bearing means (25) is made up of two parts within its length (58).

9. Shelf-servicing device as claimed in one of the preceding claims, **characterised in that** the caterpillar track system (26), in particular of the load-bearing means (25), is drivingly connected to a drive (46).

10. Shelf-servicing device as claimed in one of the preceding claims, **characterised in that** a drive motor of the caterpillar track system (26) of the load-bearing means (25) is provided in the form of an electric, fluid-operated or hydraulic motor.

11. Shelf-servicing device as claimed in one of the preceding claims, **characterised in that** the telescopic system (18) is mounted semi-rigidly on the lifting carriage (17) about a shaft extending parallel with the support surface (8) and more or less perpendicular to the direction of extension of the telescopic system (18).

12. Shelf-servicing device as claimed in one of the preceding claims, **characterised in that** the caterpillar track system (26) of the load-bearing means (25) is provided with a locking mechanism (51).

13. Shelf-servicing device as claimed in one of the preceding claims, **characterised in that** roller axes of the roller system (57) of the load-bearing means (25) extend perpendicular to the direction of extension of the telescopic system (18) and parallel with the support surface (8).

14. Shelf-servicing device as claimed in one of the preceding claims, **characterised in that** a retaining mechanism is provided for the pallets which can be coupled with the telescopic arm (23).

15. Shelf-servicing device as claimed in one of the preceding claims, **characterised in that** a drive connection (48) in the form of a transmission (50) is provided between the caterpillar track system (26) of the load-supporting means (24) and the caterpillar track system (26) of the load-bearing means (25).

16. Shelf-servicing device as claimed in one of the preceding claims, **characterised in that** the drive connection (48) can be disengaged.

17. Shelf-servicing device as claimed in one of the preceding claims, **characterised in that** the drives (46) are provided in the form of drives (46) co-operating directly with the respective caterpillar track system (26), the speed, in particular rotation speed, of which is controlled by a synchronising unit.

18. Shelf-servicing device as claimed in one of the preceding claims, **characterised in that** the caterpillar track systems (26) of the load-bearing means (25) and the load-supporting means (24) are provided with inlet and outlet inclinations facing the pallet base (40) and the support section (34) at end regions.

19. Shelf-servicing device as claimed in one of the preceding claims, **characterised in that** a distance (44) between surfaces (39, 43) of the circulating means (31) is adjustable.

20. Shelf-servicing device as claimed in one of the preceding claims, **characterised in that** a displacement mechanism (60) co-operates with at least one of the caterpillar track systems (26), in particular with the load-bearing means (25), to effect a relative displacement in the direction of a full height (59) of the load-carrying means (20).

21. Shelf-servicing device as claimed in one of the preceding claims, **characterised in that** at least one of the caterpillar track systems (26), in particular the load-bearing means (25), is mounted in a guide system (61) on the telescopic arm (23) so as to be displaceable.

22. Shelf-servicing device as claimed in one of the preceding claims, **characterised in that** the displacement mechanism (60) is provided in the form of an eccentric drive, spindle drive, hydraulic drive, etc..

23. Shelf-servicing device as claimed in one of the preceding claims, **characterised in that** a displacement path of the displacement mechanism (60) is between 10 mm and 50 mm, in particular 30 mm.

24. Shelf-servicing device as claimed in one of the preceding claims, **characterised in that** a displacement force of the displacement mechanism (60) corresponds to at least a gross load of the pallet (6).

25. Shelf-servicing device as claimed in one of the preceding claims, **characterised in that** a length (58) of the caterpillar track systems (26) approximately corresponds to a depth (35) of the shelf (3).

26. Shelf-servicing device as claimed in one of the preceding claims, **characterised in that** a circulating means (31) of the caterpillar track systems (26) is provided in the form of chains, belts, conveyors, etc..

27. Shelf-servicing device as claimed in claim 26, **characterised in that** a guide system (59) co-operates with the circulating means (31) between pulley wheels (30).

## Revendications

1. Appareil de manutention pour rayonnages pour le stockage et le déstockage de palettes, de boîtes de stockage etc., dans un entrepôt à rayonnages respectivement hors de celui-ci avec un chariot de levage déplaçable dans un couloir entre rayonnages dans la direction longitudinale et en hauteur, avec un moyen de réception de charge télescopique, apte à rentrer dans les rayonnages (3) de l'entrepôt à rayonnages, avec un élément extractible final (21) déplaçable entre une position au chariot de levage (17) et une position dans le rayonnage (3) avec au moins un moyen porteur de charge (25) et un moyen de soutien de charge (24) soutenant l'élément extractible final (21) pendant l'entrée et la sortie dans et hors du rayonnage (3) sur celui-ci, **caractérisé en ce que** le moyen de soutien de charge (24) est constitué d'au moins un agencement à chenilles (26) avec un moyen de rotation sans fin (31), et qu'un autre agencement à chenilles (26) ou un agencement à rouleaux (57) est disposé sur le bras télescopique (24) comme moyen porteur de charge (25).

2. Appareil de manutention pour rayonnages selon la revendication 1, **caractérisé en ce que** le moyen de réception de charge (20) est formé de préférence par deux bras télescopiques (23) espacés l'un de l'autre avec à chaque fois un moyen porteur de charge (25) et un moyen de soutien de charge (24).

3. Appareil de manutention pour rayonnages selon la revendication 1 ou 2, **caractérisé en ce que** les agencements à chenilles (26) du moyen de soutien de charge (24) et du moyen porteur de charge (25) sont disposés d'une manière alignée entre eux dans un plan s'étendant perpendiculairement à une face d'appui (8) de l'appareil de manutention pour rayonnages (1), et les moyens de soutien de charge (24), orientés vers la face d'appui (8), sont disposés au bras télescopique (23).

4. Appareil de manutention pour rayonnages selon l'une des revendications précédentes, **caractérisé en ce que** les agencements à chenilles (26) du moyen de soutien de charge (24) et du moyen porteur de charge (25) sont disposés dans des plans décalés parallèlement l'un de l'autre, s'étendant perpendiculairement à la face d'appui (8).

5. Appareil de manutention pour rayonnages selon l'une des revendications précédentes, **caractérisé en ce que** l'agencement à chenilles (26) est formé par un brin de chaîne, de courroie ou de câble sans fin sur des roues de renvoi (30) disposées dans des zones d'extrémité (27, 28) du bras télescopique (23).

6. Appareil de manutention pour rayonnages selon l'une des revendications précédentes, **caractérisé en ce qu'**une longueur (58) de l'agencement à chenilles (26) correspond à peu près à une profondeur de rayonnage simple (35).

7. Appareil de manutention pour rayonnages selon l'une des revendications précédentes, **caractérisé en ce que** l'agencement télescopique (18) est formé par un agencement télescopique à deux bras.

8. Appareil de manutention pour rayonnages selon l'une des revendications précédentes, **caractérisé en ce que** l'agencement à chenilles (26) du moyen porteur de charge (25) est réalisé en deux parties dans sa longueur (58).

9. Appareil de manutention pour rayonnages selon l'une des revendications précédentes, **caractérisé en ce que** l'agencement à chenilles (26), en particulier du moyen porteur de charge (25), est relié pour son entraînement à un dispositif d'entraînement (46).

10. Appareil de manutention pour rayonnages selon l'une des revendications précédentes, **caractérisé en ce qu'**un moteur d'entraînement de l'agencement à chenilles (26) du moyen porteur de charge (25) est formé par un moteur électrique, fluidique ou hydraulique.

11. Appareil de manutention pour rayonnages selon l'une des revendications précédentes, **caractérisé en ce que** l'agencement télescopique (18) est logé d'une manière semi-rigide au chariot de levage (17) autour d'une formation d'axe s'étendant parallèlement à la face d'appui (8) et à peu près perpendiculairement à la direction de sortie de l'agencement télescopique (26).

12. Appareil de manutention pour rayonnages selon l'une des revendications précédentes, **caractérisé en ce que** l'agencement à chenilles (26) du moyen porteur de charge (25) est pourvu d'un dispositif de blocage (51).

13. Appareil de manutention pour rayonnages selon l'une des revendications précédentes, **caractérisé en ce que** les axes de rouleau de l'agencement à rouleaux (57) du moyen porteur de charge (25) s'étendent perpendiculairement à la direction de sortie de l'agencement télescopique (18) et parallèlement à la face d'appui (8).

14. Appareil de manutention pour rayonnages selon l'une des revendications précédentes, **caractérisé en ce qu'**un dispositif de retenue apte à être couplé pour les palettes etc., est disposé au bras télescopique (23).

15. Appareil de manutention pour rayonnages selon l'une des revendications précédentes, **caractérisé en ce qu'**une liaison d'entraînement (48) formée par un engrenage (50) existe entre l'agencement à chenilles (26) du moyen de soutien de charge (24) et l'agencement à chenilles (26) du moyen porteur de charge (25).

16. Appareil de manutention pour rayonnages selon l'une des revendications précédentes, **caractérisé en ce que** la liaison d'entraînement (48) est réalisée de façon à pouvoir être découplée.

17. Appareil de manutention pour rayonnages selon l'une des revendications précédentes, **caractérisé en ce que** les dispositifs d'entraînement (46) sont formés par des dispositifs d'entraînement (46) associés directement à l'agencement à chenilles respectif (26), dont la vitesse, en particulier le nombre de tours, est réglée par une installation de synchronisation.

18. Appareil de manutention pour rayonnages selon l'une des revendications précédentes, **caractérisé en ce que** les agencements à chenilles (26) du moyen porteur de charge (25) et du moyen de soutien de charge (24) présentent dans des zones d'extrémité des biais d'entrée et de sortie orientés vers le fond de palette (40) et le profilé d'appui (34).

19. Appareil de manutention pour rayonnages selon l'une des revendications précédentes, **caractérisé en ce qu'**un écart (44) entre les surfaces (39, 43) des moyens de rotation (31) est ajustable.

20. Appareil de manutention pour rayonnages selon l'une des revendications précédentes, **caractérisé en ce qu'**un dispositif d'ajustage (60) en vue d'un réglage relatif en direction d'une hauteur totale (59) du moyen de réception de charge (20) est associé à au moins l'un des agencements à chenille (26), en particulier au moyen porteur de charge (25).

21. Appareil de manutention pour rayonnages selon l'une des revendications précédentes, **caractérisé en ce qu'**au moins l'un des agencements à chenilles (26), en particulier le moyen porteur de charge (25), est logé d'une manière ajustable dans un agencement de guidage (61) au bras télescopique (23).

22. Appareil de manutention pour rayonnages selon l'une des revendications précédentes, **caractérisé en ce que** le dispositif de réglage (60) est formé par une commande à excentrique, une commande à broche, une commande hydraulique etc.

23. Appareil de manutention pour rayonnages selon l'une des revendications précédentes, **caractérisé en ce qu'**un chemin d'ajustement du dispositif de réglage (60) est compris entre 10 mm et 50 mm, et qu'il est en particulier de 30 mm.

24. Appareil de manutention pour rayonnages selon l'une des revendications précédentes, **caractérisé en ce qu'**une force de réglage du dispositif de réglage (60) correspond au moins à une charge brute de la palette (6).

25. Appareil de manutention pour rayonnages selon l'une des revendications précédentes, **caractérisé en ce qu'**une longueur (58) des agencements à chenilles (26) correspond à peu près à une profondeur (25) du rayonnage (3).

26. Appareil de manutention pour rayonnages selon l'une des revendications précédentes, **caractérisé en ce qu'**un moyen de rotation (31) des agencements à chenilles (26) est formé par des chaînes, des courroies, des bandes etc.

27. Appareil de manutention pour rayonnages selon la revendication 26, **caractérisé en ce qu'**un agencement de guidage (59) est associé au moyen de rotation (31) entre les roues de renvoi (30).
